# EUROPEAN PATENT SPECIFICATION

(11) **EP 2 018 233 B1**
(45) Date of publication and mention of the grant of the patent: **21.03.2012**
(21) Application number: 07733853.1
(22) Date of filing: 23.04.2007
(51) Int. Cl.: B09B 3/00

(54) **Method for recycling and transformation of hazardous wastes and of metals, metal oxides at industrial starting material**
Verfahren zur Rezyklierung und Transformation von gefährlichen Abfällen und von Metallen und Metalloxiden bei technischem Ausgangsmaterial
Procédé de recyclage et de transformation de déchets dangereux et de métaux, d'oxydes métalliques en matière première industrielle

(30) Priority: 24.04.2006 HU 0600317
(43) Date of publication of application: 28.01.2009
(73) Proprietor: BÉM ZRT., 3791 Sajókeresztúr (HU)
(72) Inventor: PALLA, János, H-3508 Miskolc (HU); RÕCZEI, István, H-3793 Sajóecseg (HU)
(74) Representative: Varga, Tamas Péter
(86) International application number: PCT/HU2007/000036
(87) International publication number: WO 2007/122436

(56) References cited:
- WO-A-98/02593
- DE-A1- 4 414 321
- DE-C- 539 818
- WPI WORLD PATENT INFORMATION DERWENT, DERWENT, GB, vol. 29, no. 88, 23 December 1987 (1987-12-23), XP002041891

## Description

The subject of the invention is a method for recycling and transformation of metallurgical by-products and hazardous wastes containing iron or other metals, metal oxides into industrial raw materials, which makes possible industrial use, respectively recycling of iron and other metallic industry by-products otherwise impossible to use directly.

In Hungary processing of metallurgical by-products containing iron or other metal or metal oxides and other hazardous wastes containing iron or other metals or metal oxids is not solved, no such kind of utilization has taken place. Therefore these materials are being stored at present at temporary storehouses. Beyond environmental damages the fact, that these materials containing iron or other metals or metal-oxides do not get back to the circle of steel production and other technologies causes considerable economic damage.

An additional problem is that iron and other industrial wastes with metal contents have other contamination content, heavy metal content, for example: zinc, lead. These heavy metals leave in steam form during the known processes of making harmless imposing additional dangerous burden on the environment. This is also important, because metallurgical processes involve enriching of zinc in the wastes produced, meaning an important factor during making materials harmless.

As far as we know there are hundreds of tons of iron and other metals or other metallurgical wastes with metal oxid content that can be classified hazardous waste stored. Most significant of them is the by-product of LD steel production, the socalled converter sludge, and cinder of rolling mill contaminated with different oil-derivates and other cutting industrial waste contaminated with oil.

In the state of the art there are various methods for the re-cycling of iron and metallurgical by-products containing metal or metal oxides and iron or other hazardous wastes containing iron or iron oxides.

The university textbook made by Dr.Ottó Farkas in 1968 in Budapest published by Tankonyvkiado for the Miskolc Heavy-industry Technological University called Raw-iron production describes a so-called Dwight-Lloyd system for continuous sintering equipment. The essence of the function of the equipment is a wandering grid, consisting of several joining cars forming an indefinite transporting, respectively sintering belt going on a horizontal field. At the in-take end of the sintering belt the feeding equipment spreads first the grid-protecting material, then the compound to be shrunk on to the belt. The belt forwards the material with steady speed towards the direction of movement. Reaching igniter furnace of gas or oil fuelling the fuel in the mixture ignites the surface of the compound. The air coming through the compound feeds the movement of the fire, respectively the reaching of the burning zone towards the lower layer. The suction is ensured by an exhaust. The end-products of the burning get to the dust detaching cyclones resp. filters through a collecting pipe, then they leave the funnel through the exhaust. The dust detaching cyclones control the dust of burn products, and feed the dust back into the compound to be sintered. The sintered material will leave the sintering belt and will be classified according to particle size and they will be further used according to their size.

In the state of the art the HU 223 304 Hungarian patent description describes such a method, which relates to carbonization of wastes, respectively powders of metals, metal alloys, ores or metal-compound content with the use of synthetic bitumen. The method for utilization of disperse wastes and/or environment contaminating powders and sludge takes place with the help of a binding material by cold carbonization. It is characterized by using a synthetic bitumen granule as binding material produced from the mixture of plastic wastes, preferably polypropylen, polyamid and polyethylen. Calculated on basis of the mass of these 5-40% mineral oil is present in a kneading-molding equipment at 150 °C-250 °C temperature using a synthetic bitumen granule of an initial melting point of above 110 °C. The bitumen used is made of 0-10 mm size granules by grinding and 0.5-20% is applied calculated on the mass of the powders.

The Hungarian patent description HU 222 518 makes known a method for immobilizing hazardous materials, especially water soluble inorganic and/or organic hazardous materials, such as metal salts, organic or inorganic acids, wastes, solvents. During the method an acid especially hydrochlroric acid-water solution and/or suspension containing silicates - especially clinker of fine size, or for example blast-furnace clinker from iron production - is mixed with hazardous material, alkaline materials, in given case with cement and/or loose ashes, and/or lime. This mixture is formed to such a consistency, which is usual in cement technology, setting its water content making it suitable for depositing and they let it set. The characteristics of the method is, that before adding alkaline materials to a water solvent and/or suspension glass-like silicates of rough particle size especially clinker of fine size are mixed. The quantity of clinker is between 20-80 weight%, with particle size of 2 mm-8 mm, preferably 8 mm and from melted state it is cooled down by water quickly.

The Hungarian patent description HU 210 396 describes a method for pyrometallurgical treatment of metallurgical raw material, when the metallurgical raw material is exposed to the effect of high temperature and the sulphidizing and/or reduction reaction result in an end-product of metallic character. Its essence is, that
a) the metallurgical raw material is changed into a melted body melting it at high temperature.
b) in the environment of the melted body a first reaction zone, as well as a second reaction zone located in the melted body and joining the first reaction zone are formed,
c) a gas of oxidizing effect and granular metallurgical raw material are fed into the first reaction zone,
d) the metallurgical raw material is oxidized in the first reaction zone,
e) at least a part of the reaction products gained in the oxidation reaction is fed into the second reaction zone and
f) sulphidication and/or reduction reactions take place in the second reaction zone.

The document XP 002041891 (SU 86 068742 860328) makes known a process comprising loading the charge in two layers , with the oil-bearing components in the top layer, igniting the bottom layer, laying the upper layer on it, igniting and sintering with air being blown or sucked downwards through the charge. The sintering of the top layer is done after sintering of the bottom layer for 0.75-0.92 of its ht., with ratio of hts. Of bottom and top layers 0.3:1.3. The advantage of this solution is that the productivity is increased, and the efficiency of combustion of the oil is greater.

The DE 4414 321 patent description corresponding to the preamble of claim 1 makes known process and installation for valorisation of waste, contaminated with organic substances, and sinter product.

The WO 98 02593 patent description makes known a process in which the second layer has improved sintering quality, and also improved waste-gas values. During the process for heat conversion of material containing organic substances in a two-stage process, after ignition of said first layer (1), a second layer (8) is applied which contains organic substances and has a maximum layer thickness of 20 % of the first layer and the second layer is heat treated when the combustion zone of the first layer burns up to at least 70 % of the organic substances entering the combustion zone of the first layer from the second layer and following the pressure difference. The region above the combustion zone of the first layer has to have a different temperature which prevents condensation of the organic substances entering the first layer from the second layer.

The DE 539 818 patent description is also known as a document of the relevant state of the art.

The P 97 00729 Hungarian patent application published on 28 April 1999 makes known a metallurgical method in the state of the art for converting by-products of iron content and hazardous wastes of iron content into raw material for steel production. During the method on a production machine designed specifically for this purpose such a compound is produced from the metallurgical by-products of iron content and hazardous wastes of iron content as well as from the components classified as raw materials during production, which makes it possible that the compound can be fed in two layers. With the consequent ignition of both layers a double fire-zone forms, which carries out in one process ignition and after-burning of the oil-derivates, the metallurgical processes of the compound containing iron. To ensure it the flue-gases produced in the active zone are drawn through the end-products in the reduction zone the reduction takes place, and a product of proper strength, particle size and chemical composition is produced.

The drawbacks of the known methods are the following:
It is not possible to process powders, sludges, materials of micro size resulting from the great suction. The keeping of the additional contaminations in the processed wastes, especially for example different compounds of sulphur content, respectively heavy-metals, for example zinc, lead is not solved. So they leave in steam form together with the gases produced during the process, respectively the are precipitated at the cold points of the system. Their escape to the atmosphere together with the gases leaving results in additional hazardous load on the environment. On top of that zinc significantly enriches in the waste produced during metallurgical processes, resulting in a significant factor during making the material harmless. Therefore cleaning, filtering of burn products must be additionally ensured.

When working out the solution according to the invention we aimed to elaborate such a process besides eliminating the drawbacks of the known solution, which is suitable to make iron and metallurgical by-products containing metal or metal oxides and iron or other hazardous waste containing iron or iron oxides harmless in such a way, that the resulting products should not contaminate the environment and they can be used as raw materials for steel production or other technologies ensuring re-cycling of currently stored iron and metallurgical by-products containing metal or metal oxides and iron or other hazardous waste containing iron or iron oxides conforming with the production technology of the reorganizational program of the region. Furthermore we aimed to elaborate a technology suitable for binding heavy metals in the raw materials and preventing their escape to the environment.

When working out the solution according to the invention, we realized, that if metallurgical by-products used as raw material containing iron and/or other metal respectively iron containing oil and/or other hazardous wastes containing metal are processed during the known sintering process in such a way, that a bedding layer of limestone or dolomit, respectively from the material of the agglomerate resulting from the process is spread below the basic layer of iron and/or other metallurgical by-products containing metal and hazardous waste, then the set aim can be achieved.

The invention is a method for recycling and transformation of hazardous wastes and of to metals, metal oxides to industrial starting material as defined in claim 1.

In one of preferred application of the method according to the invention, the particle size of the material of the bedding layer is 5-20 mm, and it does not contain combustible material.

In another preferred application of the method according to the invention, the thickness of the spread of bedding layer is 10-15% of that of the full agglomerate end product in given case 20-25 mm.

In a further preferred application of the method according to the invention, the suction vacuum below the wandering grid is 2500 Pa.

In a further preferred application of the method according to the invention, the composition of the basic layer is: pelletized iron, and/or hazardous waste of metal content and solid fuel.

In a further preferred application of the method according to the invention, the composition of the upper layer is: pelletized iron and/or hazardous waste of metal and oil content and solid fuel.

In a further preferred application of the method according to the invention, the solid fuel mixed to the basic layer and to the upper layer is ground coke or the mixture of ground coke and coal dust.

In a further preferred application of the method according to the invention, the process takes place in vacuum-sealed technological system in a regulated way.

A few of the preferable realizations of the method according to the invention are set forth with the examples below:

### Example 1

During the method the bedding layer 17 used is: limestone or dolomit.

The basic layer 1 is: iron and/or other by-products with metal content, respectively hazardous wastes and coal dust or ground coke.

The upper layer 2 is: iron and/or other products with metal content and iron and/or other hazardous wastes contaminated with oil resp. oil-derivates.

During the method at first composition of the materials of certain layers during separate preparatory processes takes place. Following this during the method according to the invention first spreading of the bedding layer 17 takes place, then the basic layer 1 and the upper layer 2 are spread. At the end of the process the cooled down agglomerate 14 is chopped, classified, then transported for further application.

During the method as first step the bedding layer 17, which is in this case limestone or dolomit is spread. It binds mainly as an example sulphuric dioxide. We can also use limestone, resp. ground dolomit for binding heavy metals, but this method is more expensive than using the material of the agglomerate as bedding layer 17 (see Example 2).

### Example 2

During the method the material of the agglomerate is: the material of the bedding layer 17. The basic layer 1 is: iron and/or other by-products with metal content, respectively hazardous wastes and ground coke or the mixture of ground coke and coal dust.

The upper layer 2 is: iron and/or other products with metal content and iron and/or other hazardous wastes with metal content contaminated with oil resp. oil-derivatives, and ground coke or mixture of ground coke and coal dust.

During the method at first composition of the materials of certain layers during separate preparatory processes takes place. Following this during the method according to the invention first spreading of the bedding layer 17 takes place, then the basic layer 1 and the upper layer 2 are spread. At the end of the process the cooled down agglomerate 14 is chopped, classified, then transported for further application.

During the method first the bedding layer 17 is spread, but here its role is different than in case of other technologies, because here it serves expressly the absorbtion of contaminating gases. During the technological process there is no heating at the bedding layer 17 and sucking through the air is also not absolutely necessary.

Then spreading of the basic layer 1 follows onto the bedding layer 17. After the spreading the basic layer 1 moves below the igniter furnace 3 of natural gas fuelling and in the meantime the sucking through the layers starts. Resulting from this burning of the basic layer 1 starts and glowing starts from the top downwards. Then those metallurgical processes start, during which oxidation and reduction processes take place. During the process the agglomerate moves on a machine-line of continuous function, during the move a continuous sucking through takes place and in the meantime different processes are under way. The glowing basic layer 1 moves further from the first igniter furnace 3 and within a definite time depending on the concrete technology, reaches the place of spreading of the upper layer 2.

Then the spreading of the upper layer 2 containing wastes with oil takes place at a given site, which is determined experimentally in advance. Depending on the type of the agglomerate, the exact spot of the spreading is influenced by the moving speed of wandering grid 20, the thickness of the basic layer 1, the fuel content and the rate of vacuum. The exact spot of the spreading can be controlled by the measuring of the temperature of flue-gas of vacuum chambers 21. The temperature of the last three vacuum chambers 21 is measured.

On the surface of the glowing basic layer 1 a solid zone is formed after a time, on top of which is the upper layer 2 spread. The upper layer 2 moves together with the glowing agglomerate and resulting from a second igniting furnace 5 burning starts. Resulting from the second igniting furnace 5 and the heat of the glowing basic layer 1 steam and gases of oil content develop from the upper layer 2 and go through the primary fire zone 4 of the basic layer 1 resulting from suction. Here different chemical and physical processes take place.

The oil content of the glowing upper layer 2 bums partly directly, partly going through the basic layer 1 and resulting from the suction the burnt products leaving the bedding layer 17 as the effect of sucking through are practically free of oily hazardous gases (dioxins) and oil derivatives. So it is not necessary to apply after-burning, because the technological process includes it.

The solution according to the invention is set forth with the figures enclosed:
Fig 1 shows the theoretical process diagram of the realization of the method according to the invention in the schematical section of the equipment used during the method.
Fig 2 shows the layering of the agglomerate during the process in section.

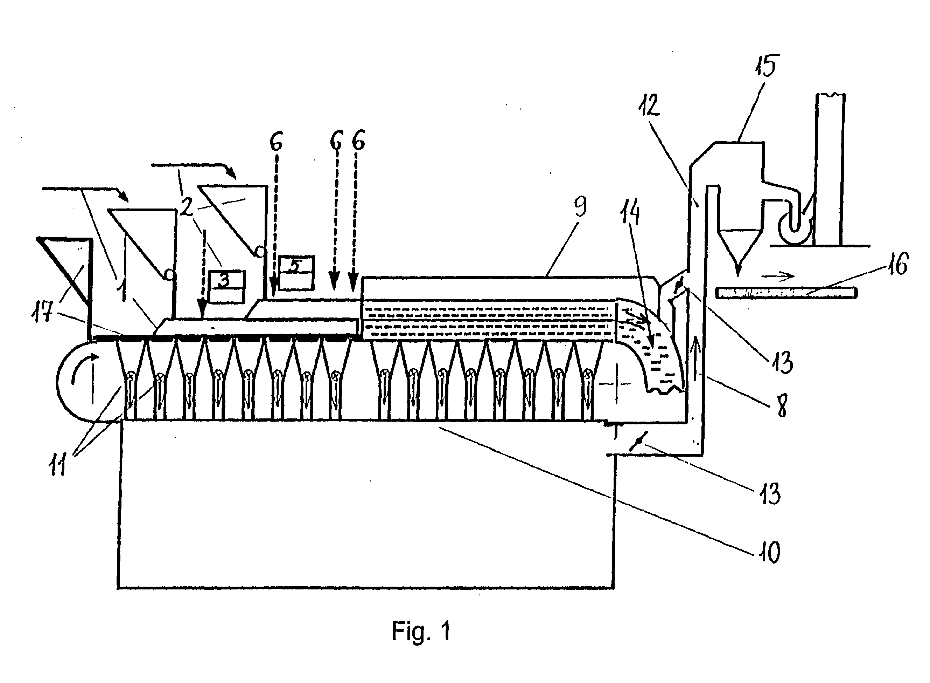

Fig 1 shows the theoretical process diagram of the realization of the method according to the invention in the schematical section of the equipment used during the method.

During the method according to the invention in order to enact the metallurgical processes three layers of different components are compiled from the available iron and/or other by-products of metal content respectively hazardous wastes, furthermore from the auxiliary materials used during the method in the knowledge of the current end-product requirements and the quantitative and qualitative parameters of the raw materials to be used.

Firstly the bedding layer 17 is spread. Its material can be limestone, or dolomit, resp. the material of the agglomerate itself produced at the end of the method.

Secondly the basic layer 1 is spread. This layer does not contain iron and/or other metal contaminated with oil derivatives. The iron and/or other metals together with the calculated solid fuel with the addition of water are exposed in pelletized form to the production machine.

The third layer to be spread is the upper layer 2, which is obviously spread after the basic layer 1. Besides iron and/or other metals offering the frame structure all the iron and/or other hazardous wastes containing metals contaminated with oil resp. oil-derivatives, which are spread after wetting and pelletizing on the already set surface of the basic layer 1, get in this upper layer 2.

The basic layer 1 gets directly below the first igniting furnace 3 of natural gas fuelling after the spreading, where the solid fuel part of the basic layer 1 ignites at a temperature of 1150 °C - 1200 °C and the primary fire-zone 4 is formed resulting from the air 6 pumped through the layer from the top, which bums through with the advance of the burning cars in a syncronized way in the full cross-section of the basic layer 1. After igniting the basic layer 1 upper layer 2 is spread on the already solid surface of the basic layer 1. With the advance of the burning cars, the upper layer 2 located to the proper site is ignited with the help of the second igniting furnace 5 similarly to basic layer 1. Following the igniting of the upper layer 2 the air 6 sucked through going through the upper fire zone 7 heats the layers below the upper fire zone 7 so the iron and/or other metals contaminated with oil derivates fed into the upper layer 2 are pre-heated as well, the contaminating oil derivatives become gases and going from the top downwards in the same direction as that of the definite direction of sucking through reach the primary fire zone 4, where they are ignited together with the other flammable gases and get burnt. The fire zone of the basic layer 1 is the primary fire zone 4. The heat developing here is one of the components of the heat requirement of sintering, the balance of the heat requirement is ensured by the burning of the solid fuel.

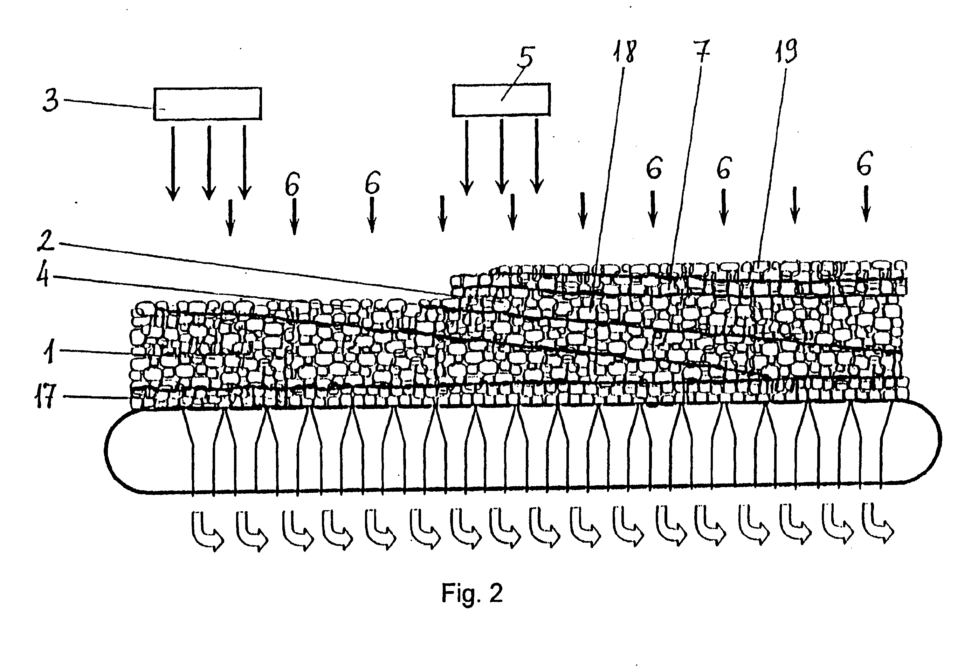

Fig 2 shows the layering of the agglomerate during the process in section. During the method as first step the bedding layer 17 (limestone, dolomit) is spread, which binds mainly as an example sulphuric dioxide. If we use the material of the agglomerate as bedding layer 17 instead of limestone or dolomit then heavy metals can be bound too. Ground limestone or dolomit can also be used instead of the material of the agglomerate, but that method is more expensive. This bedding layer 17 is suitable for binding the steams of heavy metals at the cold points in the exhaust system preventing their escape into the environment, respectively not to load the flue gas cleaning unit 15. In case of the state of the art, already mentioned Dwight-Lloyd process the bedding layer is used for the protection of the grid only, they use it this way in practice. In these cases the gas and heavy metal steam-binding role is not used in case of the bedding layer.

Determining the material of the bedding layer 17 depends on the composition of the wastes used. In case of wastes of higher sulphur content it is practical to use limestone or dolomit as bedding layer 17 because their sulphur binding parameters are better. During the method the basic layer 1 glowing from the top bums out the bedding layer 17 joining it and there active CaO develops. This CaO reacts with the gases with sulphur content flowing from the top downwards and depending on humidity content and other factors different sulphate compounds are produced. The active CaO is also proper to bind heavy metals in the process mentioned before, but it is more expensive and less efficient to use it for this purpose than the application of the bedding layer 17 of the materials of the agglomerate. The agglomerate spread here is the classified to suitable size and fractioned agglomerate 14 end-product produced at the end of the process.

While CaCO₃ bums out at 900 °C and CaO is produced, in case of bedding layer 17 spread from the material of the agglomerate higher temperature is necessary for its melting, therefore the cooling effect to the heavy metal steams in the gases flowing through is bigger, so their precipitation is even more efficient, they crystallize and remain in the end-product of the agglomerate 14.

The bedding layer 17 has a traditional mechanical protecting function as well, because it protects the wandering grid 20 and the gases condensing do not condense on the grid, but in the bedding layer 17.

Resulting from the continuous movement of the grid 20 the basic layer 1 is spread onto the bedding layer 17, which is ignited by the first igniting furnace 3. Resulting from the igniting the primary fire zone 4 develops, moving from the top downwards due to the lower vacuum (suction). The following step is the spreading of the upper layer 2 containing wastes of oil content as well on the given site, which is determined in advance by experiments. Depending on the type of the agglomerate the site is set with the moving speed of the grid, the thickness of the basic layer, the fuel content and the extent of the vacuum. The exact spot of the spreading can be controlled with the measuring of the flue-gas temperature of the vacuum chambers 21. The temperature of the flue-gas is measured in the last three vacuum chambers.

After the spreading the upper layer 2 is ignited as well with the second igniting furnace 5, which is necessary to ensure leaving of oily steams in the upper layer 2 through the primary fire zone 4 of the basic layer 1. Resulting from the second igniting the upper layer 2 itself develops agglomerates as well. The process is going on till the agglomerization of the upper layer 2 has been completed and the primary fire zone 4 of the basic layer 1 starts cooling. The end-product 14 produced this way is the agglomerate. It is chopped, classified in conformity with the user's requirements, that is it depends on the field of application hereafter.

It is advantageous to use bedding layer 17 for making harmless the steams and gases of the wastes of oil content in the upper layer 2, because the reduced gas absorbing capacity resulting from the overheating of the oil in the basic layer 1 is compensated by the lower temperature of the bedding layer 17 so its cooling effect works even if the basic layer 1 overheats.

In a preferable concrete application of the method according to the invention the technology worked out by us is such, where a continuous production machine with wandering grids and burning cars functions. The basic process is based on a process of Dwight-Lloyd principle with wandering grid and sintering function. Equipment of this type is transformed. This is a technology of sucking through, where in each case burning takes place from the top downwards and the burning process itself is carried out on the grid-rods.

Concrete datas of certain layers during the process:
Thickness of bedding layer: 20-25 mm
Thickness of basic layer: 150-200 mm
Thickness of upper layer: 50-100 mm
Rate of vacuum (suction): 500-2500 Pa: this is a great advantage, this is produced through an electro filter ventillator.

The processes taking place in the agglomerate:
The temperature is 1150-1200 °C in both igniting furnaces.
The temperature in the fire zone: 1200-1400 °C. Higher temperature than this is not preferable, because in that case the sulphur content already bound is released, loading the flue-gas cleaning system additionally.

During the method according to the invention in order to get metallurgical processes going we compiled two layers of different composition from available iron and/or other by-products containing metal products and other hazardous wastes containing iron or other metal products in the knowledge of the demand for end-products as well as the quantitative and qualitative correlation of the raw materials to be used. As a third layer a bedding layer is spread below the above materials.

According to the method such a compound is made from the above mentioned products and from the components considered as raw materials during the production which makes possible, that on the production machine designed for this purpose the compound compiled can be fed in two layers in order to be able to oxidize the unburnt hydrocarbons - which are leaving the upper layer - in the fire zone of the lower layer. There is an equilibrium of the liquid and solid phase in both layers, so an agglomerate (product) of proper strength, particle size and chemical composition is produced.

In the two fire zones the following heating technological and metallurgical processes take place:
The hydrocarbons are oxidized and during the production the metal oxides are reduced, then partly reoxidized (reoxidation). In the liquid phase formed in the fire zone the metal oxides get into equilibrium with the clinker developers. The metal oxides with the clinker developers (CaO, MgO, Al₂O₃, SiO₂) produce those minerals, which bind the metals and their oxides when set. Production of minerals can be controlled according to the consumer's demand with choosing the proper rate of clinker developers (composition of insert: with calculation of insert). From the point of view of alkalinity it is important: should it be able to be reduced or not.

Heating technological processes:
The igniting furnace heats the ground coke mixed into the spread basic layer to flash point on the upper surface of the layer. With consequent igniting of both layers a double fire zone is formed. It carries out in one process the igniting and the after burning of oil derivates and the metallurgical processes of the iron elements of the compound. For making sure the reduction takes place in such a way that the fuel gases arose in the active zone are sucked through the end product in the reduction zone. So the product produced is suitable for re-cycling with proper strength, particle size and chemical composition. During the process the bedding layer spread below the basic layer binds the compounds containing sulphur as well as the steams and gases of metal content preventing them to get into the environment.

During the method according to the invention it is essential from the point of view of processible metals or metal oxides, that these are possibly of similar characteristics than iron from the point of view of the main process. So as the reaction capacity of them are the same or close to that of the iron. Such metals are for example: mangane, crom, nickel, vanadium, titan, calcium, magnezium. Besides the method is suitable for the process of other metals, for example aluminium, silicium, but those do not take part in the main process, but are included in the end product.

In case of a definite application of the method according to the invention:
The lower bedding layer 17 consists of retrieved materials of the end product of production, or classified limestone, dolomit with particle size of 5-20 mm.
   Its role is important from environmental protection, serves the binding of sulphuric dioxide and other contaminating gases and/or heavy metal. The bedding layer 17 contains no flammable components and is able to keep the contaminating content of the gas burning product with an efficiency of 50-70%.

The basic layer 1 above the bedding layer is a mixture containing several components:
- Flammable component, preferably coke or coal, or a proper mixture of these, particle size 0-3 mm, preferably 1-2 mm, the determination of the concrete size is made on basis of concrete burning technology aspects. The concrete particle size of the flammable component influences the thickness of the primary fire zone 4, the speed of burning and the quantity of heat necessary for the metallurgical processes.
- Wastes with metal content (but not oily) (hazardous and non-hazardous wastes).
- Minerals, eg. the ore itself, ore dust, sand, limestone.
- Or materials coming from such production, technology, which are end products, eg. metallurgical clinker, industrial sludge, cuts, separated clinker, lime sludge.

The particle size of the basic layer 1 can change from the finest to max. 50-60 mm, they must be homogenized and mixed. The particle size is important from the point of view of burning, it influences the efficiency of sucking through.

Above the primary layer 1 on the top is located the upper layer 2, the components of which are:
- The material of the primary layer, that is identical with the material and components of the primary layer and can contain any such raw materials which are included in the primary layer, but it is specially compiled compared to the material of the primary layer, containing not exactly the same materials as the primary layer.
- Waste of oily metal content, can be oily cuts, oily cinder, oily polishing and grinding sludges, which are of solid state in dried state. It can be any technological waste that has a metal content contaminated with oil. This metal is characteristically iron, but it can be other metal content as well.
- In addition to them solid fuel, coke or coal mixture, which are mixed with the above particle size.

The advantages of the solution according to the invention compared to the basic technology are:
The extent of suction is one order of magnitude smaller, than that of the basic technology. It makes possible, that dusts, sludges can be re-cycled too. The raw materials used can be of micro particle size as well after proper preparation.

The materials processed are non-minerals, but expressly wastes, hazardous wastes, which should be otherwise stored. It is possible not only to re-cycle wastes of iron content, but wastes containing other metals as well. Resulting from this valuable metallurgical, respectively building industrial raw materials and auxiliary materials can be gained with this method.

With the help of the bedding layer binding of additional contaminating materials for example compounds of sulphur content, respectively heavy metals is possible in the same process. It does not replace cleaning of flue gas, but significantly decreases hazardous material emission. Application of the bedding layer makes possible binding of heavy metal contamination in the raw materials and keeping them in the ready agglomerate. This way the heavy metal components (zinc, lead) do not get into the environment in steam or gas form, respectively their extraction from the flue gas is necessary to a much lesser extent, this way not burdening the cleaning equipment in most of the raw materials.

An additional advantage of the method according to the invention is that the oxides of the metal components form a complex clinker. It is advantageous from the point of view of further processing. It is not necessary to concentrate only on the iron content of the raw material. The end product is a bound material, not a hazardous waste. It can be put back not only to iron production, but can be used for road construction or as building materials.

## Claims

1. Method for recycling and transformation of hazardous wastes, metals, metal oxides to industrial starting material, in a continuous sintering equipment having a wandering grid comprising the following steps:
- spreading a bedding layer (17) on the wandering grid of the continuous sintering equipment;
- spreading on the bedding layer (17) a layer (2) of material contaminated with oil or oil derivates and containing by-products containing iron and other metals or metal oxides and other hazardous wastes containing iron or other metals or metal oxides;
- igniting the layer (2) contaminated with oil or oil derivates with a igniting furnace (5) where the solid fuel part ignites forming thereby a fire zone (7) resulting from the air sucked through the layer from its top thereby carrying out in one process the igniting and after-burning of oil or oil derivates;
- after the agglomeration of the contaminated layer has been completed the agglomerate is chopped and classified to conform with the requirements of re-cycling in respect to strength, particle size and chemical composition
**characterized in that**:
- the bedding layer (17) is made of ground limestone or dolomite, or a fractionated and properly classified agglomerate end product obtained by the method for recycling and has such a free CaO content that it is suitable to react with gases having sulfur content or to bind heavy metals;
- before spreading the layer (2) of material contaminated with oil or oil derivates a basic layer (1) containing by-products not contaminated with oil or oil derivates and containing iron and other metals or metal oxides and other hazardous wastes containing iron or other metals or metal oxides is spread on the bedding layer (17) and is ignited with a first igniting furnace (3) where the solid fuel part ignites forming thereby a primary fire zone (4) moving from the top downwards as a result from the air sucked through the layer from its top.

2. Method according to claim 1, **characterized by** that, the particle size of the material of the bedding layer (17) is 5-20 mm, and it does not contain combustible material.

3. Method according to claims 1 or 2, **characterized by** that, the thickness of the spread of bedding layer (17) is 10-15% of that of the full agglomerate end product (14) in given case 20-25 mm.

4. Method according to any of claims 1-3, **characterized by** that, the suction vacuum below the wandering grid (20) is 2,500 Pa.

5. Method according to any of claims 1-4, **characterized by** that, the composition of the basic layer (1) is: pelletized iron, and/or hazardous waste of metal content and solid fuel.

6. Method according to any of claims 1-5, **characterized by** that, the composition of the upper layer (2) is: pelletized iron and/or hazardous waste of metal and oil content and solid fuel.

7. Method according to any of claims 1-6, **characterized by** that, the solid fuel mixed to the basic layer (1) and to the upper layer (2) is ground coke or the mixture of ground coke and coal dust.

8. Method according to any of claims 1-7, **characterized by** that, the process takes place in vacuum-scaled technological system in a regulated way.

## Patentansprüche

1. Verfahren zum Recycling und zur Transformation gefährlicher Abfälle. Metallen und Metalloxyden zum industriellen Grundstoff in einem kontinuierlichen Schrumpfapparat mit Wanderrost, dieses Verfahren enthält die nächsten Schritte:
- Aufstellung der Bettungsschicht (17) auf den Wanderrost des kontinuierlich laufenden Schrumpfapparats:
- Auftragung einer Schicht (2), die mit Öl oder Ölderivat verschmutzte. Eisen und andere Metallen oder Metalloxyden und andere gefährliche Abfälle enthaltende Nebenprodukte enthält. auf die Bettungsschicht (17):
- Zündung der mit Öl oder Ölderivaten verschmutzten Schicht (2) mit einem Zündofen (5), wobei der feste Brennstoffteil sich entzündet und daher eine Feuerzone (7) gebildet wird, dank der Luftdurchsaugung vom Oberteil der Schicht, und daher laufen die Zündung und das Nachbrennen der Öl oder Ölderivat in einem Verfahren ab:
- nach der kompletten Agglomeration der beschmutzten Schicht wird das Agglomerat zerstückelt und klassifiziert entsprechend der Anforderung des Recycling bezogen auf die Festigkeit, die Teilchengröße und die chemische Zusammensetzung,
**dadurch gekennzeichnet, daß**
- das Material der Bettungsschicht (17) ist Kalkmahlgut oder Dolomitmahlgut, oder Agglomeratendprodukt frakzioniert und entsprechend klassifiziert, hergestellt durch das Recyclingsverfahren, und es hat einen so großen CaO Inhalt, durch den es mit schwefelhaltigen Gases reagieren kann, oder es die Schwermetallen binden kann.
- vor der Auftragung der mit Öl oder Ölderivaten verschmutzten Schicht (2) wird eine Grundschicht (I), die mit Öl und Ölderivaten nicht verschmutzt ist, und andere Metallen oder Metalloxyden und andere, Metallen oder Metalloxyden enthaltende gefährliche Abfälle enthaltende Nebenprodukte enthält, auf die Bettungsschicht (17) aufgetragen, und wird mit einem ersten Zündofen (3) entzündet, wobei der feste Brennstoffteil sich ent/ündet und daher bildet sich eine erste Feuerzone (4) mit einer Fortbewegung von Oben nach Unten dank der Luftdurchsaugung vom Oberteil der Schicht.

2. Verfahren nach Anspruch 1, **dadurch gekennzeichnet, daß** die Teilchengröße des Materials der Bettungsschicht (17) 5-20mm ist, und es enthält kein verbrennbares Material.

3. Verfahren nach Anspruch 1 oder 2, **dadurch gekennzeichnet, daß** die Aufstellungsdicke der Bettungsschicht (17) 10-15% der Dicke des ganzen Agglomeratendprodukts ist, gegebenfalls sie ist 20-25mm.

4. Verfahren nach Ansprüchen 1 bis 3, **dadurch gekennzeichnet, daß** das Ansaugsvakuum unter dem Wanderrost (20) 2500 Pa ist.

5. Verfahren nach Ansprüchen 1 bis 4, **dadurch gekennzeichnet. daß** die Zusammensetzung der Grundschicht (1) ist: pelletisiertes Eisen, und/oder gefährliche Abflälle mit Metallinhalt und fester Brennstoff.

6. Verfahren nach Ansprüchen 1 bis 5, **dadurch gekennzeichnet, daß** die Zusammensetzung der oberen Schicht (2) ist: pelletisiert Eisen und/oder gefährliche Abfälle mit Metallinhalt und Ölinhalt und fester Brennstoff.

7. Verfahren nach Ansprüchen 1 bis 6, **dadurch gekennzeichnet, daß** der zur Grundschicht (1) und zur oberen Schicht (2) gemischte, feste Brennstoff Koksmahlgut oder das Gemisch des Mahlgutes und des Kohtenstaubes ist.

8. Verfahren nach Ansprüchen 1 bis 6, **dadurch gekennzeichnet, daß** das Verfahren im vakuumgeschlossenen technologischen System auf regulierte Weise stattfindet.

## Revendications

1. Procédé à réutilisation et à transformation de déchets dangereux, métaux, métal-oxydes à une matière de base industrielle, dans un équipement d'agglomération de service continu ayant une grille mobile, comprenant les étapes suivants:
- étendre une couche de ballast (17) sur la grille mobile de l'équipement d'agglomération de service continu;
- étendre sur la couche de ballast (17) une couche (2) de matière contaminée de l'huile ou dérivés d'huile et contenant sous-produits contenant fer et autres métaux ou métal-oxydes et autres déchets dangeureux contenant fer ou d'autres métaux ou métal-oxydes;
- allumer la couche (2) contaminée de l'huile ou de dérivés d'huile avec un four d'allumage (5) et au cours de cela le solide combustible part allume formant ainsi une zone de feu (7), grâce à la succion d'air à travers de la couche de son haut et ainsi allumage et après-brùlage de l'huile et de dérivés d'huile s'accomplissent dans un procès;
- après la complète agglomération de la couche contaminée, l'agglomérat est concassé et classifié conformément à l'exigences de la réutilisation en rapport avec la solidité, la mesure de particule et la composition chimique,
**caractérisé en ce que**,
- la matière de la couche de ballast (17) est calcaire ou dolomite broyé, ou un agglomérat produit final fractionné et convenablement classifié obtenant par le procède à réutilisation et elle a tant de CaO libre qu'elle puisse réagir avec les gaz de soufre-contenu ou qu'elle puisse attacher les métaux lourds;
- avant d'étendre la couche (2) de matière contaminée de l'huile et de dérivés d'huile, une couche de fondation (I) contenant sous-produits ne pas contaminés de l'huile ou de dérivés d'huile et contenant fer et d'autres métaux ou metal-oxydes et d'autres déchets dangeureux contenant fer ou d'autres métaux ou métal-oxydes est étendue sur la couche de ballast (17) et est allumée avec un premier four d'allumage (3) où le solide combustible part allume formant ainsi une première zone de feu (4) avançant de haut en bas grâce à la succion d'air à travers de la couche de son haut.

2. Procédé selon la revendication 1, **caractérisé en ce que**, la mesure de particule de la matière de la couche de ballast (17) est 5-20mm et elle ne contient pas de matière combustible.

3. Procédé selon la revendication 1 ou 2, **caractérisé en ce que**, l'épaisseur d'étendre de la couche de ballast (17) est 10-15% de l'épaisseur de tout l'agglomérat produit final (14), dans un cas donné elle est 20-25mm.

4. Procédé selon les revendications 1 à 3, **caractérisé en ce que**. le vacuum de succion sous la grille mobile (20) est 2500Pa (250mm v.o.).

5. Procédé selon les revendications 1 à 4, **caractérise en ce que**, la composition de la couche de fondation (1) est: du fer pelletisé et/ou de déchets dangeureux contenant du métal et du combustible solide.

6. Procédé selon les revendications 1 à 5, **caractérisé en ce que**, la composition de la couche supérieure (2) est: du fer pelletisé et/ou de déchets dangeureux contenant du métal et de l'huile et du combustible solide.

7. Procédé selon les revendications 1 à 6, **caractérisé en ce que**, le combustible solide mélangé à la couche de fondation (1) et à la couche supérieure (2) est du coke broyé ou le mélange du coke broyé et du charbon pulvérisé.

8. Procédé selon les revendications 1 à 7, **caractérisé en ce que**, le procédé se réalise dans un système fermé de vacuum. d'une manière régularisée.
